# EUROPEAN PATENT SPECIFICATION

(11) **EP 0 347 442 B1**
(45) Date of publication and mention of the grant of the patent: **05.02.1997**
(21) Application number: 88909917.2
(22) Date of filing: 21.09.1988
(51) Int. Cl.: C08F 4/64, C08F 10/00, C08F 10/06, C08F 10/08, C08F 10/14

(54) **MODIFIED SILICA BASED CATALYST**
AUF MODIFIZIERTE SILIKA BASIERENDER KATALYSATOR
CATALYSEUR A BASE DE SILICE MODIFIEE

(30) Priority: 21.09.1987 US 99190
(43) Date of publication of application: 27.12.1989
(73) Proprietor: QUANTUM CHEMICAL CORPORATION (a Virginia corp.), New York, NY 10016 (US)
(72) Inventor: BUEHLER, Charles, K., Naperville, IL 60565 (US); FRIES, Richard, W., Joliet, IL 60435 (US); PULLUKAT, Thomas, J., Hoffman Estates, IL 60195 (US)
(74) Representative: Grünecker, Kinkeldey, Stockmair & Schwanhäusser Anwaltssozietät
(86) International application number: US8803258
(87) International publication number: WO8902446

(56) References cited:
- EP-A- 0 244 678
- GB-A- 2 184 448
- US-A- 4 565 795
- US-A- 4 612 299
- US-A- 4 647 550
- US-A- 4 686 199
- US-A- 4 738 942

## Description

### BACKGROUND OF THE DISCLOSURE

### 1. Field of the Invention

The instant invention is directed to a high activity supported catalyst useful in the production of polypropylene of relatively high powder bulk density, high isotacticity and narrow particle side distribution. More particularly, the instant invention is directed to a catalyst, useful in the polymerization of olefins such as propylene to stereoregular olefin polymers, wherein a silica support is modified and thereafter treated with magnesium and titanium compounds.

### 2. Background of the Prior Art

The polymerization of olefins using Ziegler-Natta catalysts is widely utilized. These catalysts provide polyolefins in high yield possessing the desired characteristics of these polymers. However, the use of these conventional catalysts are subject to important failings. Thus, new and improved catalysts are continually being sought. An important class of catalysts where improvement is sought is the very commercially important alpha-olefin, propylene.

Commonly in the polymerization of propylene a catalyst having a magnesium halide support is utilized. However, when polypropylene polymerized from a magnesium halide supported catalyst is processed into molded products, the polypropylene molding machine processing this polymer is subjected to corrosion. This corrosion is caused by the residual presence of magnesium halide in the polypropylene product. The adverse effect of this corrosion is not limited to damaging expensive molding machinery. More importantly, the polypropylene molded article processed in this equipment is characterized by aesthetic flaws.

Another detrimental property of catalysts, conventionally used in the polymerization of propylene polymers, involves the characteristic in many propylene catalysts of the prior art that they incorporate internal electron donors to insure that the propylene polymer product is highly isotactic. Those skilled in the art are aware of the criticality of stereoregularity in propylene polymers. However, those skilled in the art are also aware that the presence of internal electron donors creates difficulties. Unless the amount and type of electron donor compound is carefully selected not only is the stereoregularity of the resultant polymer deficient but poor catalytic activity often results. This detrimental effect still occurs if the catalyst is formed with the proper electron donor compound added in the wrong sequence.

The utilization of electron donor compounds often creates additional problems involving offensive odors in the final polymeric product. This unfortunate result obtains even if the ideal electron donor compound, in the correct concentration, added at the proper time in the catalyst formation process, is utilized. Thus, polymers formed from catalysts which include an electron donor compound must oftentimes be deashed or deodorized in order to insure that the final product gives off no odor.

The difficulties discussed above have spurred workers skilled in this art to develop new catalysts which attempt to overcome these difficulties. In one such attempt at eliminating the problem created by halogen-containing carriers, inorganic oxides, such as silica, were proposed as a support. This carrier, containing no halogen, was reacted with a magnesium dialkoxide and an electron donor, such as a carboxylic acid monoester, and a titanium halide compound. This catalyst is described in Japanese Patent Publication 162,607/1983.

Even if the allegations made in this disclosure of high catalytic activity, production of a highly stereospecific polymer having a high bulk density and narrow particle size distribution were correct, the problems associated with odor are not addressed by the use of this catalyst. However, testing of this catalyst establishes that the catalyst provides low activity and that the polymer product is characterized by insufficient stereoregularity and poor particle size distribution.

A more recent disclosure, U.S. Patent 4,595,735, provides a catalytic component for the polymerization of olefins prepared by contacting a magnesium alkoxide, a halogenated hydrocarbon, a halogenated silane and a titanium compound. It is emphasized that this catalyst, useful in the polymerization of ethylene homopolymers and copolymers, incorporates a halogenated hydrocarbon. This catalyst is not only principally directed to the polymerization of ethylene polymers but, significantly, emphasizes the formation of high melt index polymers. Those skilled in the art are aware of the necessity for commercially useful polypropylene to possess low melt flow rates. That is, the molecular weight of the polymers produced in accordance with the '735 catalyst is significantly lower than that required of polypropylene.

U.S. Patent 4,565,795 sets forth an olefin polymerization catalyst which is prepared by the reaction of a chemically treated silica support with a dihydrocarbyl magnesium compound and a halogenated tetravalent titanium compound. The chemical treatment of the silica support involves the use of a chlorinating compound, an alkanol, a silylating compound, an acid chloride or an organoboron compound. Again, this catalyst includes constituents which are adverse to the production of stereoregular polymers, especially polypropylene. It is thus not surprising that this catalyst is suggested for use in the polymerization of ethylene polymers.

U.S. Patent 4,530,913 to Pullukat, et al. describes a method of making a solid polymerization catalytic component by reacting a support (obtained by reacting silica with a halogen-free monofunctional silylating compound) with an organomagnesium compound and a tetravalent titanium compound. The patent shows only data for ethylene polymerization.

GB-A-2184448 discloses in Example 3 that a catalyst is obtained by treating calcined silica gel with SiCl₄, subsequently with dibutyl magnesium and then with TiCl₄. The subject matter of this GB-A document therefore differs from the subject matter of the present application in that a magnesium compound is used which is not within the group disclosed in item (c) of Claim 1.

The above remarks make clear the continuing need in the art for a new polypropylene catalyst having the desirable properties enumerated above. They also establish that the recent prior art has not met that need.

### BRIEF SUMMARY OF THE INVENTION

The present invention is directed to a catalytic precursor and the catalyst for one or more olefins providing stereospecific products such as propylene, butene-1, 3-methyl butene-1 and 4-methyl pentene-1 which, when employed in polymerization reactions, produce homopolymers and copolymers of high stereoregularity. The propylene polymer product of polymerization reactions using the catalyst of this invention is characterized by uniform particle size distribution, good spherical morphology and high bulk density. These polypropylene characteristics enhance the production rate and processability of the polymer. In addition, the catalyst is itself highly active, resulting in high polymer productivity as manifested by weight of polymer per unit weight of catalyst.

The catalyst of this invention is also characterized by safe and easy preparation. Unlike magnesium halide supported catalysts expensive ballmilling is not required. Neither is other expensive prepolymerization steps required of magnesium halide supported catalysts. Because the catalyst includes no halogen in the support, the product polymer has low halogen content, significantly reducing the problems of corrosion oftentimes encountered in the processing of such polymers. Moreover, because the catalyst retains low residual metal content, no deashing of the polymer product is required. Finally, the polymerization reaction utilizing this catalyst is enhanced due to its relative constant activity over long periods of time. Finally, the use of the subject catalyst allows for easy control of polymer molecular weight with the judicious addition of hydrogen.

The present invention relates to a silica supported magnesium-containing catalytic precursor of reduced SiOH content for reaction with a titanium halide to form a catalyst for the production of a stereospecific alpha olefin polymer characterized in that prior to reacting with titanium halide the magnesium-containing silica is reacted with at least one titanium compound having the formula Ti(OR)ₙXₘ or TiRnXm where R is aryl, alkyl or mixtures thereof; X is halogen; n is an integer of 1 to 3; m is O or an integer of 1 or 2; and the sum of m and n is 4. It also relates to preparing the catalyst from the precursor. More particularly, the invention relates to a supported catalyst for the polymerization of olefins to stereospecific polymers obtainable by reacting a modified silica support having a selective distribution of reactive hydroxyl groups as described in Claim 1 with a magnesium compound reactive with said surface hydroxyl groups, optionally reacting the thus obtained product with a silicon halide, alkyl silicon halide, boron halide or aluminum halide, further reacting the so-produced first material with a tetra-substituted organo halogen-free titanium compound wherein the organic moiety sterically hinders accessability of said organo titanium compound to the reactive sites on the modified silica support and thereafter reacting the so-produced second material with a titanium halide. More specifically, the catalyst comprises the product obtained by pretreating silica preferably by contacting it with a modifying compound selected from the group consisting of silicon halides, alkyl silicon halides, hexaalkyl disilazanes and mixtures thereof, to remove or displace a portion of the surface hydroxyl (or silanol) groups converting them to an 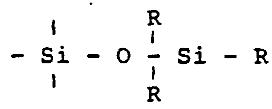 structure and providing a modified surface of controllable reactivity and chemical geometry. In addition, it may be beneficial to further react the support with other modifying compounds such as boron halides, aluminum halides or silicon halides to further remove silanol groups on the silica surface. Contact with the one or more modifying compounds and silica usually occurs at a temperature in the range of between 0°C and 100°C over a time period of between 30 minutes and 2 hours, more preferably for 45 minutes to 1½ hours at a temperature in the range of 50-75°C.

The modified silica support is thereafter treated with at least one hydrocarbon soluble magnesium compound which reacts with the support to provide regularly organized populations of modified molecular groupings, e.g., without limitation 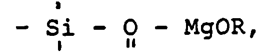 and where applicable 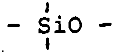 MgCl, or 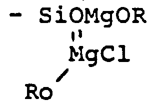 surface groups.

The magnesium-containing modified silica support is further contacted with an organo titanium-containing compound having the structural formula Ti(R)ₙXₘ and especially Ti(OR)ₙXₘ, where R is aryl, alkyl, alkaryl or mixtures thereof; X is halogen; n is an integer of 1 to 4; and m is 0 or an integer of 1 to 3 with the proviso that the sum of n and m is 4. The magnesium and titanium- containing modified silica support is then treated with a titanium-containing compound having the structural formula TiX¹ₚ(OR¹)_{q} where X¹ is halogen; R¹ is aryl or alkyl; p is an integer of 1 to 4; and q is 0 or an integer of 1 to 3 with the proviso that the sum of p and q is 4.

In another aspect of the present invention a representative process for polymerizing or copolymerizing olefins providing stereospecific polymers such as propylene is disclosed. In this process propylene is polymerized under propylene polymerization conditions utilizing the catalyst of the present invention. In addition, a first co-catalyst, an aluminum-containing compound, and a second co-catalyst, a hydrocarbyl alkoxysilane, is employed.

### DETAILED DESCRIPTION

The present invention is described in detail in the claims. The catalyst and catalyst precursor of the present invention are prepared by first modifying the surface of silica, which acts as a carrier, to replace hydroxyl groups with a surface whose structural formula is defined in part by 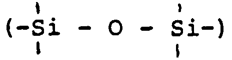 groupings.

Surface modification to provide a controllable population of surface hydroxyl can be effected by calcining the silica in an inert atmosphere, preferably, at a temperature of at least 200°C. More preferably, the calcining treatment involves calcining the silica at a temperature in the range of between 550°C and 650°C in an inert atmosphere, preferably a nitrogen atmosphere. However, the so-modified support is susceptible of ready resorption of moisture and reconstitution of its original form, hence must be carefully handled.

In a preferred and representative embodiment, the removal of surface hydroxyl groups is accomplished by treating the silica with a monofunctional organic silicon compound such as an alkyl disilazane. Examples of these compounds have the following structures: (R₃Si)₂NH, R₃Si(OR), R₃SiX and (R₃Si)₂O where R is alkyl or aryl, preferably each containing 1 to 20 carbon atoms, and X is halogen. Specific examples are hexamethyl disilazane , trialkylsilyl ethoxide or alkyl chlorosilanes. The reaction of silica with the organosilicon compound can be done in any convenient way, i.e., in solution, direct liquid-solid reaction or vapor phase reaction. In the reaction of the organosilicon compounds with silica or alumina an excess of the organosilicon compounds is used to facilitate a complete reaction. After the reaction of silica or alumina with the organosilicon. compound, it should not be thermally treated-but should be stripped of any excess organosilicon compound and by-products of the reaction by vacuum suction, solvent washing in which the preferred solvent is a liquid hydrocarbon or by purging with a gas. This can be done at a temperature between ambient and about 200°C. Of the hexaalkyl disilazanes useful in this application, hexamethyl disilazane is preferred. Such treatment is disclosed and claimed in U.S. Letters Patent No. 4,530,913 of Pullukat, et al..

The silica, whose surface is modified as described above, is preferably defined by a surface area in the range of between 80 and 400 square meters per gram, median particle size of 20 to 200 microns (1 micron = 1 µm) and a pore volume of between 0.6 to 3.0 cc/gram (1 cc/gram = 1 cm³/gram). It comprises a surface subpopulation of unreacted free hydroxyl as well as 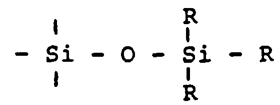 groupings, in which the R group represents the residue of the modifying agent, in the case of hexamethyl disilazane typically -CH₃, NH₃ having been liberated during the reaction. It will be understood that the reactivity and molecular dimension of the modifying agent can be important in establishing the arrangement of the surface landscape, in that the unreacted free hydroxyl and the 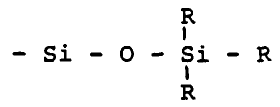 groups are naturally arranged in a somewhat ordered configuration believed to contribute to the performance of the completed catalyst especially in regulation of the provision of polypropylene of high stereoregularity.

The silica employed in the catalyst of the subject invention is preferably pure but may contain minor amounts of other inorganic oxides such as alumina, titania, zirconia and magnesia. In general, the silica support comprises at least 90% by weight pure silica. More preferably, the weight percentage of pure silica is at least 95%. Most preferably, the weight percentage of pure silica is at least 99%.

Contact between the one or more modifying compounds and silica usually occur at a temperature in the range of between 0°C and 100°C over a time period of between 30 minutes and 2 hours. More preferably, this contact occurs over a period of 45 minutes and 1½ hours at a temperature in the range of between 0°C and 75°C.

The modified silica support is also contacted with a hydrocarbon soluble magnesium-containing compound, preferably an alkoxy magnesium chloride in an inert hydrocarbon solvent. Hydrocarbon soluble magnesium compounds that can be used in the preparation of the catalyst of this invention include hydrocarbyloxy magnesiums, hydrocarbyloxymagnesium halides and mixtures thereof. Preferably, the magnesium compounds are magnesium alkoxides, alkoxymagnesium halides and mixtures thereof. Especially preferred magnesium compounds contemplated for use in the catalyst formation of the present invention include 2-methylpentoxymagnesium chloride, pentoxymagnesium chloride, di-2-ethylhexyloxymagnesium, di-2-methyl pentoxy magnesium and mixtures thereof. Generally, higher, e.g., C₅ and above up to about C₂₀, hydrocarbyl substitution is preferred to assure adequate performance including hydrocarbon solubility. One may also employ such compounds as butyl magnesium silylamide 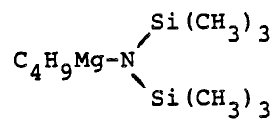 employing a hydrocarbyl magnesium moiety linked to at least one functionality reactive with the surface hydroxyl of the support.

The reaction between the silica support and the soluble magnesium compound or compounds usually occurs at a temperature in the range of between 0°C and 160°C. More preferably, this reaction occurs at a temperature in the range of between 50°C and 150°C. Most preferably, the reaction occurs at a temperature in the range of between 60°C and 150°C. The reaction occurs over a period of between 5 minutes and 6 hours. More preferably, the reaction occurs over a period of between 45 minutes and 3 hours.

In another preferred embodiment, the reaction takes place in the presence of a minimum level of solvent where the alkoxymagnesium chloride, for example, is dried onto the silica to maximize interaction with the reactive surface groups, then the system was flushed with a large volume of solvent and then optionally reacted with a modifying agent such as a silicon halide, alkyl silicon halide, boron halide or aluminum halide.

Typically, the reaction is conducted with an excess of the magnesium compound relative to the reactive groups on the support, which may contain residual alcohol, or the reaction of which may result in the deposition and absorption of alcohol. It may be desirable in certain preparations to remove unreacted magnesium compound and particularly the alcohol so as to avoid side reactions and undesirable residues in the ensuing reactions. In consequence, it is appropriate to remove these materials by treatment with a component such as a silicon halide, boron halide, aluminum halide, alkyl silicon halide or mixtures thereof. Silicon tetrachloride at 0-60°C is perfectly suitable. The support may likewise be treated prior to reaction with the magnesium compound with, e.g., silicon tetrachloride which is absorbed onto the surface and facilitates reaction of the magnesium compound with the surface reactive sites. Thus, the silicon tetrachloride may be introduced where desired either before or after interreaction with the magnesium compound. In referring to washes in the specification and the Examples, generally a portion of an inert solvent such as heptane is added, stirred with the support, and decanted.

In effecting substitution and exchange reactions in relation to the alcohol moieties, it has been found that interreaction with such a modifying agent can effect change in the surface chemistry, i.e., a rearrangement of molecular structure, and the agent can in these cases be selectively employed as of choice for such purposes. While not wishing to be bound by an essentially theoretical elucidation, it is believed from observed evolution of HCl that scavenging of free alcohol is a significant result of interaction with this agent, but that as well substitution and rearrangement at the 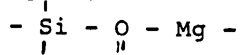 site may also be involved.

The so-reacted magnesium-containing silica support presents a surface reflective of its modification in the first step above-identified, now largely capped with - MgOR groups, as set forth above, in geometrically ordered surface locations. That support is then rendered catalytically active by further reaction with titanium compounds.

To this end, the silica support is contacted with a titanium-containing compound having the structural formula Ti(OR)ₙXₘ where R is aryl, alkyl or mixtures thereof; X is halogen; n is an integer of 1 to 4; and m is 0 or an integer of 1 to 3 with the proviso that the sum of n and m is 4.

In a preferred embodiment, the titanium-containing compound is one or more of tetrahydrocarbyloxytitaniums, trihydrocarbyloxytitanium halides, dihydrocarbyloxytitanium dihalides and mixtures thereof.

In the most preferred embodiment, the titanium containing compound is a tetravalent titanium compound free of halogen.
Thus, the titanium compound is characterized by "n" being 4 and "m" being 0. Consequently, a variety of titanium compounds may be employed and include tetrahydrocarbyl titanium compounds, including tetrahydrocarbyl titanates which are, in present experience, preferred. The hydrocarbyl moiety of the titanium compound includes aliphatic and cycloaliphatic groups, as well as aromatic groups. Exemplary groups include C₁-C₂₈ alkanes such as isopropyl, octyl, dodecyl, heptadecyl and similar such groups; cycloalkyls of 3-7 carbons, such as cyclobutyl, cyclopentyl, cyclohexyl and similar such groups including alkyl-substituted cycloalkyls; aromatic hydrocarbons such as phenyl, tolyl and xylyl. Particularly preferred hydrocarbyl groups are those which are sterically hindered or strained.

Particularly preferred titanium esters proposed for use in the formation of the catalyst of the subject invention include tetracresyl titanate, titanium tetrastearate, titanium tetrabutoxide, titanium tetranonolate, tetra-2-ethylhexyl titanate, tetraisobutyl titanate, tetra n-propyltitanate, tetraisopropyltitanate or mixtures or oligomers thereof including isomeric mixtures of individual compounds. In general, the longer chain or bulkier organic moiety is preferred for improved stereospecificity in the resulting polymer product.

It is believed that the molecular dimension of the organic moiety of these compounds can be important in the performance of the resulting catalyst in ordering the arrangement and geometric configuration of the catalytic sites on the support in such a manner as to direct the production of desired polymeric species, for example, in relation to stereoregularity, while also admitting the provision of other desired polymer properties in the resulting product. Specifically, organic moieties of larger molecular dimension are preferred which, without limitation, are believed through steric hindrance, straining or other effects to contribute to definition of a catalytic surface effective to provide desirable product properties. Thus, through the combination of a controlled surface reactivity in an attrition resistant support and a geometrically hindered reaction between magnesium and titanium groupings, there is afforded a uniquely effective catalyst without the need to incorporate an internal electron donor.

Best results have been achieved with titanium cresylate and especially the orthoisomer among the commercially available titanium esters, but it is expected that similarly dimensioned and/or shaped organic moieties would be equally suitable provided they are directly bonded to the titanium atom thereby controllably regulating the development of the active catalytic sites at the molecular level.

The reaction between the modified support and the titanium compound occurs at a temperature in the range of between about 0°C and 120°C for a period from 5 minutes to 2 hours or more. More preferably, the reaction occurs at a temperature in the range of between 10°C and 100°C. Still more preferably, the reaction takes place at a temperature in the range of between 10°C and 80°C.

The final step in the preparation of the catalyst of this invention involves contacting the catalytic precursor as described with a titanium-containing compound preferably having the structural formula TiX¹ₚ(OR¹)_{q} where X¹ is halogen, R¹ is aryl or alkyl; p is an integer of 1 to 4; and q is 0 or an integer of 1 to 3 with the proviso that the sum of p and q is 4. More preferably, p is an integer of 2 to 4 and q is 0, 1 or 2. In the most preferred embodiments, for the best performance, the catalytic precursor is contacted with the titanium compound promptly, i.e. within a limited time e g. up to about 20 minutes at room temperature.

Among the titanium-containing compounds within the contemplation of this class are titanium tetrachloride, titanium tetrabromide, methoxytitanium trichloride, ethoxytitanium trichloride and diethoxytitanium dichloride :

Most preferably, p is an integer of 4 and q is 0. That is, most preferably, the titanium compound is a titanium tetrahalide. Of these, titanium tetrachloride is particularly preferred.

The reaction between the silica composition and the titanium halide occurs at a temperature in the range of between 0°C and 150°C. More preferably, the temperature of this reaction is in the range of between 50°C and 120°C. Most preferably, the temperature of this contact is in the range of between 80°C and 100°C.

The titanium compound and the silica composition is reacted for a period in the range of between 1 hour and 4 hours. More preferably, the reaction occurs over a period of between 1½ hour and 3½ hours. Most preferably, the time of reaction is between 1 hour and 3 hours.

It should be appreciated that all the treatment steps in the formation of the catalyst of this invention, the reaction of silica with the modifying compound, the hydrocarbon soluble magnesium compound and the two titanium compounds typically involve the reaction between a solid support and a solution. As such, no ballmilling or other solid mixing is required. This expensive and difficult operation, common to the formation of polymerization catalysts of the prior art, is thus eliminated. Those skilled in the art are aware that, in the case where a hydrocarbon solvent is employed, the solvent may be allowed to remain with the reaction mass or can be removed by decantation, filtration or evaporation.

Further observations regarding the above formation steps include the fact that the morphology of the polymer produced from this catalyst emulates that of the support upon which the above-recited reactions occur; that the absence of any halogen in the support aids in keeping the halogen content of the polymer produced therefrom very low; that the relatively low concentrations of titanium and magnesium on the silica support tends to keep the concentration of magnesium and titanium residues in the polymer formed at similarly low levels; that the synthesis of the catalyst occurs at moderate temperature, preferably, in the range of between 0°C and 100°C; and that even though this catalyst does not need an electron donor for good isotacticity it is possible to use them if desired. If an election donor is used alkoxysilanes, alkylbenzoates or alkylphthalates is preferred.

Another aspect of the present invention involves the use of the catalyst of the present invention in the polymerization of propylene to produce polypropylene and propylene copolymers. In this process propylene is polymerized under propylene polymerization conditions in the presence of the catalyst of the instant invention.

Present also may be a co-catalyst, an aluminum-containing compound. The aluminum compound is preferably an alkylaluminum, an alkylaluminum halide or mixtures thereof. More preferably, the co-catalyst is an aluminum alkyl. Of the aluminum alkyls, triethylaluminum and triisobutylaluminum are particularly preferred.

A second co-catalyst may be also employed in the propylene polymerization process of the present invention. The second co-catalyst of this invention is preferably at least one silane compound. Preferably, the silane compound is a hydrocarbyl alkoxysilane. Preferred hydrocarbyl alkoxysilanes include hydrocarbyl trialkoxysilanes, dihydrocarbyl dialkoxysilanes and trihydrocarbyl alkoxysilanes. Of the hydrocarbyl trialkoxysilanes, those preferred involve a hydrocarbyl having the meanings phenyl and C₁-C₆ alkyl; and a C₁-C₁₀ trialkoxy. Particularly preferred species include hexyltrimethoxysilane, amyltriethoxysilane and isobutyltrimethoxysilane.

The usual propylene polymerization conditions involve a polymerization temperature in the range of between 35°C and 100°C. More preferably, the temperature of this reaction is in the range of 50°C and 80°C. The pressure of the propylene polymerization reaction is in the range of between 300 psig (1 psig = 6.89 kPaG) and 600 psig, more preferably, between about 400 psig and about 500 psig. Naturally, although not necessary to the effective use of the catalyst, prepolymerization procedures known to the art can be applied to advantage where desired.

The following examples are given to illustrate the scope of this invention. Because these examples are given for illustrative purposes only, the invention embodied therein should not be limited thereto.

In accordance with the most preferred embodiments, highly isotactic polypropylene (> 98% heptane insolubles) of high powder bulk density (> 25 lb/ft³ (1 lb/ft³ = 16 kg/m³)) and narrow particle size (200-1,500 microns) can be produced with catalyst yield in excess of 5,000 g polymer/g cat/hr.

### EXAMPLE 1

### Catalyst Preparation

A catalyst was prepared by introducing 12.5 mmol of silicon tetrachloride and 5.0 g of silica previously calcined in nitrogen at 600°C in a slurry of 500 ml. heptane into a 3-neck, 250 ml. round bottom flask equipped with a nitrogen purge, a paddle stirrer, a stirring gland, a condenser and a bubbler. This slurry was stirred for one hour at 60°C. The silica utilized in this example had a surface area of 300 m²/g, a median particle size of 80-90 microns and a pore volume of 1.3 cc/g (1 cc/g = 1 cm³/g). Thereafter, 12.5 mmol of 2-methyl-pentyloxymagnesium chloride was added and reacted with the silica slurry for one hour at 70°C. Following this step 3.175 mmol of tetracresyltitanate (derivative of mixed cresol isomers) was added. The titanate was allowed to react with the slurry for one hour at 70°C.

The solid product of these reaction steps was allowed to settle and the supernatant was syphoned off. Fifty ml of fresh heptane was added to the solid and stirred without further heating. The solid was again allowed to settle and the supernatant syphoned off. This washing step was repeated three times until a total of 200 ml. of supernatant was removed. Liquid titanium tetrachloride was added to the washed solid and allowed to react with the solid for two hours at 80°C to 100°C with stirring. The solid product of this reaction was washed three times with heptane, as described in the previous washing step, until 300 ml. of supernatant, inclusive of all washings, was removed. The remainder of the solvent was evaporated to produce a salmon-colored, free-flowing spherically-shaped solid catalyst.

### EXAMPLE 2

### Catalyst Preparation

A catalyst was prepared in accordance with the procedure of Example 1. However, due to minor variations in the washing procedures, set forth in Example 1, the concentration of magnesium and titanium in the final product varied therefrom. Specifically, whereas the concentration of Mg and Ti of the catalyst of Example 1 was 3.49 weight % and 2.56 weight %, respectively, the concentration of Mg and Ti in the catalyst of the present example was 3.60 weight % and 3.90 weight % respectively.

### EXAMPLES 3 TO 5

### Preparation of Catalysts

Three additional catalysts were prepared in accordance with the procedure of Example 1 except that the 5.0 g of silica was pretreated with hexamethyl disilazane rather than the calcining step of Examples 1 and 2. The modified silica was dried in the reactor for at least 1 hour at 100°C with agitation and a 2.7 L/min. nitrogen purge. Moreover, the concentration of magnesium, contributed to by the treatment with 2-methylpentyloxymagnesium chloride, and the titanium concentration, provided by tetracresyl titanate and titanium tetrachloride, varied such that the concentration of magnesium in the catalyst of Examples 3, 4 and 5 was 3.60 weight %, 1.92 weight % and 3.10 weight %, respectively, based on the total weight of the final catalyst. Similarly, the weight percent of titanium in the catalysts of Examples 3, 4 and 5 was 3.60%, 1.37% and 2.50%, respectively. These differences were due to minor variations in the washing procedures.

### EXAMPLE 6

### Propylene Polymerization Utilizing Catalysts of Examples 1-5

Liquid propylene was separately reacted with each of the catalysts of Examples 1 to 5. In addition to 40 mg of the catalyst of each of Examples 1 to 5 two co-catalysts were utilized. These two co-catalysts were triethylaluminum and isobutyltrimethoxysilane (IBTMS). The amounts of the triethylaluminum and IBTMS employed were such that the molar ratio of aluminum to titanium to IBTMS was 40:1:8, respectively. Each propylene polymerization reaction was conducted at a pressure of 460 psig and a temperature of 70°C. In each of these runs, 4.5 mmol of hydrogen was used to control the molecular weight of the propylene homopolymer product.

The results of these polymerizations are summarized in Table 1. It is noted that the polymerization reaction time was one hour in each case except for the polymerization of the catalyst of Example 3 wherein two runs were employed utilizing one and two hour reaction times. Moreover, the one hour polymerizations involving the catalysts of Examples 2 and 5 were repeated 2 and 3 times, respectively. These runs, and the results thereof, are summarized in Table 1.

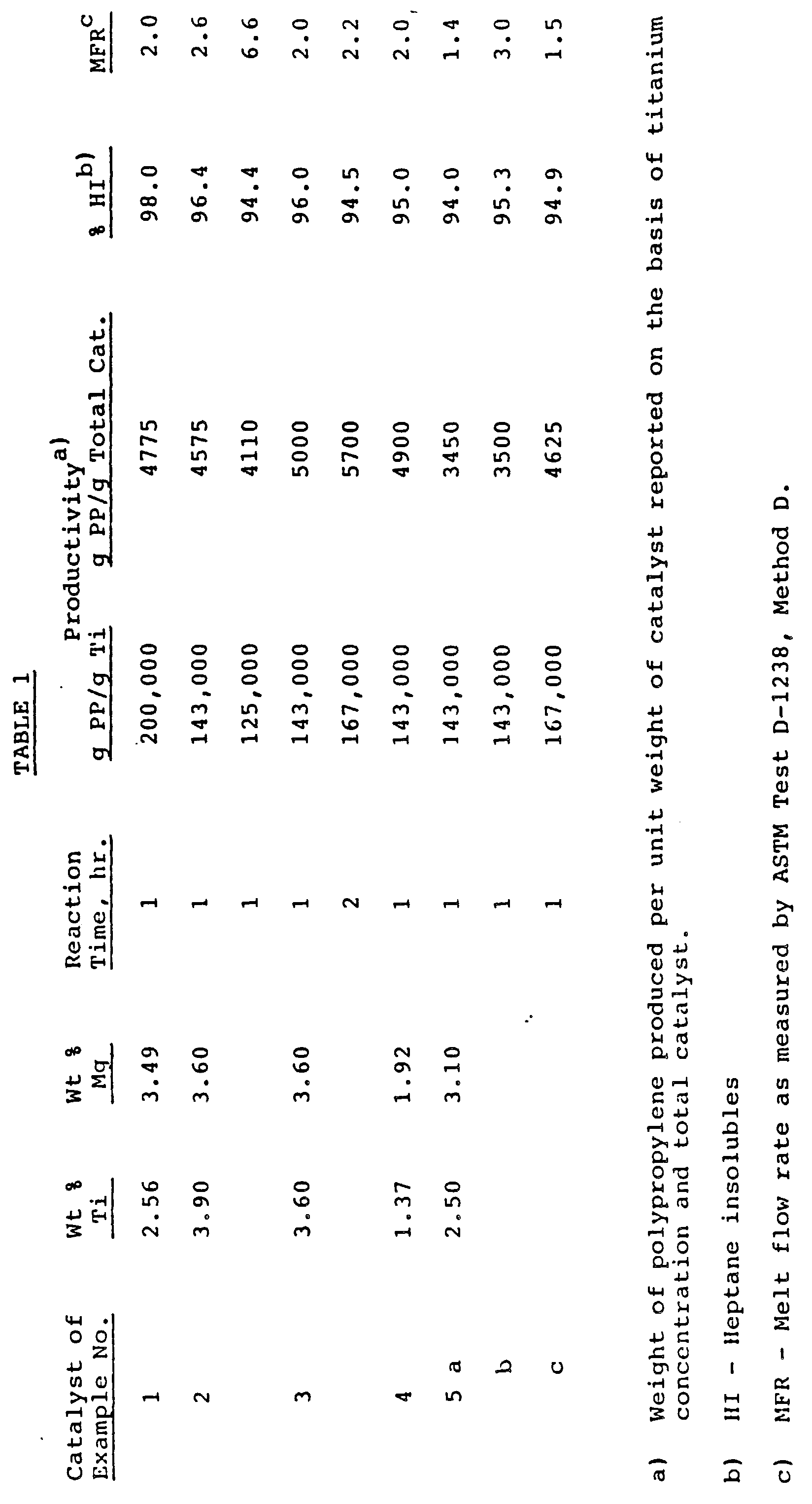

### EXAMPLE 7

### A. Catalyst Preparation

A catalyst was prepared by pretreating silica (Davison 948, having a surface area of 300 m²/g, a median particle size of 80-90 microns and a pore volume of 1.3 cc/g) with 12.5 mmol of hexamethyl disilazane per gram of silica which was then dried in the reactor for in excess of 4 hours at 100°C with agitation under 2.7 L/min. nitrogen purge.

The modified support was introduced into a 3-neck, 250 ml round bottom flask equipped with a nitrogen purge, a paddle stirrer, a stirring gland, a condenser and a bubbler. Then 2.5 mmol of 2-methylpentyloxymagnesium chloride g/SiO₂ was added, reacted with the silica slurry at 20°C then dried at 40-115°C in the reactor with stirring for two hours under a nitrogen purge at 2.7 L/min.

The resulting dried solid was then contacted with 10 ml heptane/g silica and 2.5 mmol of silicon tetrachloride/g silica for a period of 1 hour at 40°C. The material was then washed twice with 7.8 ml heptane/g silica with stirring for 3 minutes, and the supernatant siphoned off after the solid settled at the conclusion of each wash.

The so modified and washed catalytic precursor was then reacted with 0.6 mmol of titanium cresylate/g silica for 5 minutes at 30°C followed by reaction with 18 mmol titanium tetrachloride/g silica at 100°C for 2 hours and then washed for five times as described above.

Variations in these preparatory procedures may be employed to advantage in controlling catalytic activity and polymer properties. For example, incomplete drying can reduce productivity and polymer bulk density whereas longer drying times or too high an initial drying temperature can result in a decrease of catalytic activity. Generally, drying after reaction with the magnesium compound is conducted at 70-80°C for a period of 1½ to 2½ hours.

### B. Polymerization

The recovered catalyst was employed in the polymerization of propylene employing 40 mg of catalyst and co-catalysts triethylaluminum and isobutyltrimethoxysilane (IBTMS). The amounts of the triethylaluminum and IBTMS employed were such that the molar ratio of aluminum to titanium to IBTMS was 40:1:8, respectively. Each propylene polymerization reaction was conducted at a pressure of 460 psig and a temperature of 70°C for a reaction time of 1 hour. In each of these runs, 4.5 mmol of hydrogen was used to control the molecular weight of the propylene homopolymer product.

The results of runs conducted under the indicated preparation and polymerization conditions are as follows:

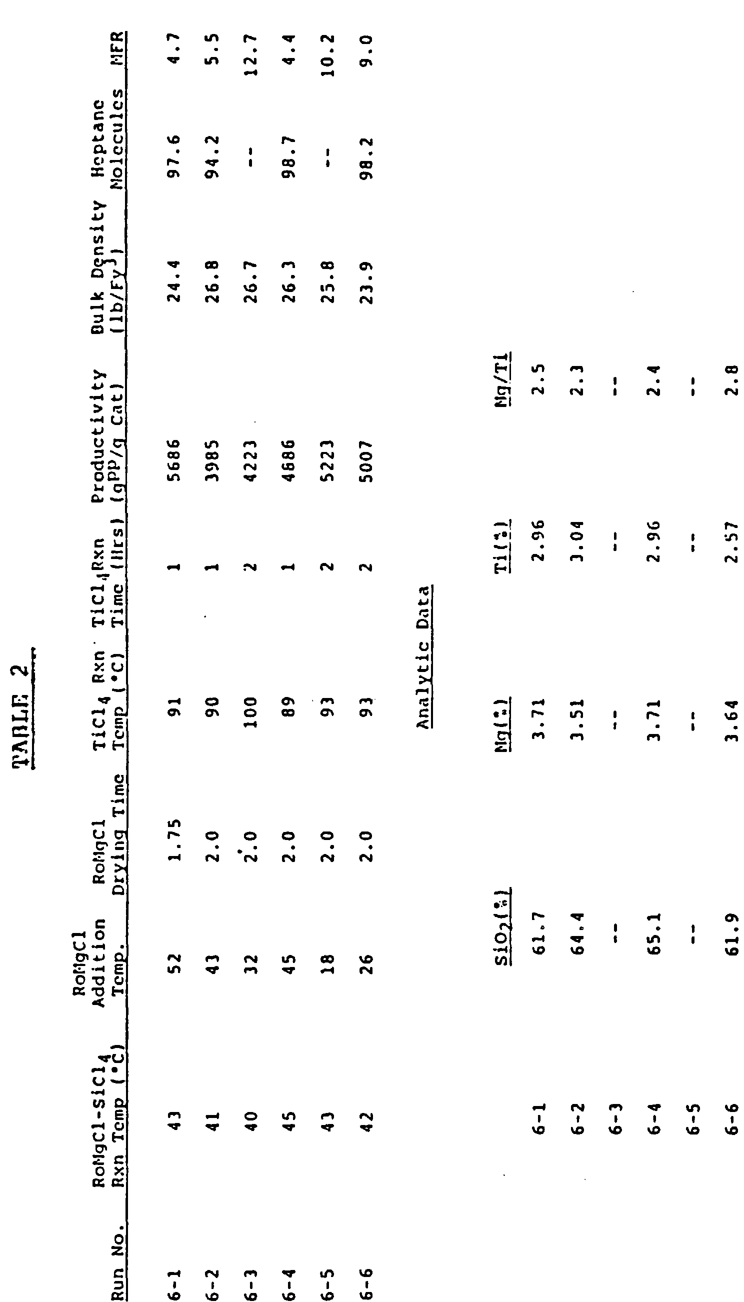

### EXAMPLES 8 AND 9

### Effect of Second Co-catalyst

The effect of the second co-catalyst was considered in these examples. In Examples 8 and 9, propylene polymerizations were conducted in accordance with the procedure of Example 6. The catalyst of Example 2 was utilized. In addition, the first co-catalyst of Example 2, triethylaluminum, was used in these examples. However, the second co-catalyst of Example 2, IBTMS, was replaced in Examples 8 and 9 with a second co-catalyst, phenyl triethoxysilane (PES). In addition, the mole ratio of aluminum to titanium to the second co-catalyst (Al/Ti/ED) of Example 2, 40:1:8, was changed in Example 7 to 20:1:10 and in Example 8 to 20:1:2.5. Thus, Examples 8 and 9 differed from each other on the basis of the concentration of PES charged into the polymerization reactor.

The results of Examples 8 and 9 are tabulated in Table 2. For comparative purposes the polymerization experiment of Example 2 is included in Table 2.

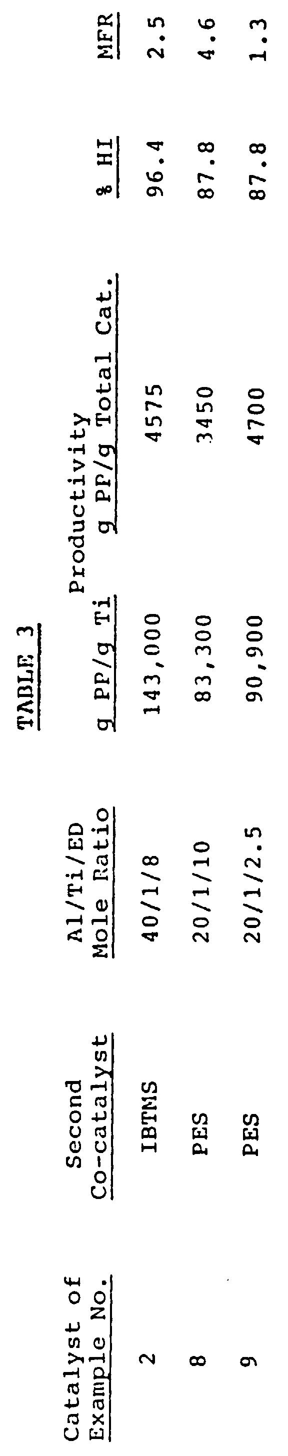

### EXAMPLES 10-11 AND COMPARATIVE EXAMPLES 1 TO 5

### Effect of Silica Surface Modifying Compounds

The effect of silica surface modifying compounds was examined in these examples. In all of these examples the silica was pretreated with 1.25 mmols of hexamethyl disilazane (HMDS) per gram of silica, reflecting a level of 1.25 mmols of reactive surface hydroxyls on the support. Variation among the examples involved the identity and amount of the modifying compounds. The identity and amount of the modifying compound is reported in Table 3.

Use of modifying compounds outside the scope of the catalyst of this invention, otherwise formed in accordance with the formation of the catalyst of Example 4, specifically 2-methyl-2-chloropropanol, phosphorus trichloride, benzoyl chloride, ethylchloroformate and trichloroethane of Comparative Examples 1, 2, 3, 4 and 5, respectively, all produced polypropylene which was deficient not only in productivity but, in addition, all produced polymers deficient in isotacticity, as manifested by percent heptane insolubles of less than 95%.

It is noted that all of these compounds, outside the scope of the modifying compounds of the catalyst of this invention, were, like the modifying compounds of the present invention, halides, specifically, chloride.

It is also emphasized that two compounds within the scope of the present invention, boron trichloride and aluminum trichloride, (Examples 10 and 11, respectively) produced excellent results in terms of their productivity and the properties of the polymer produced. Indeed, these results marginally exceeded those of Example 4, which differed from Examples 10 and 11 only in so far as the silicon tetrachloride modifier of Example 4 was replaced with BCl₃ and AlCl₃.

All of these results are tabulated in Table 3. For comparative purposes Example 4 is included in that table because but for the differences in the surface modifying treatment of silica, all of the catalysts of these examples were prepared in accordance with Example 4.

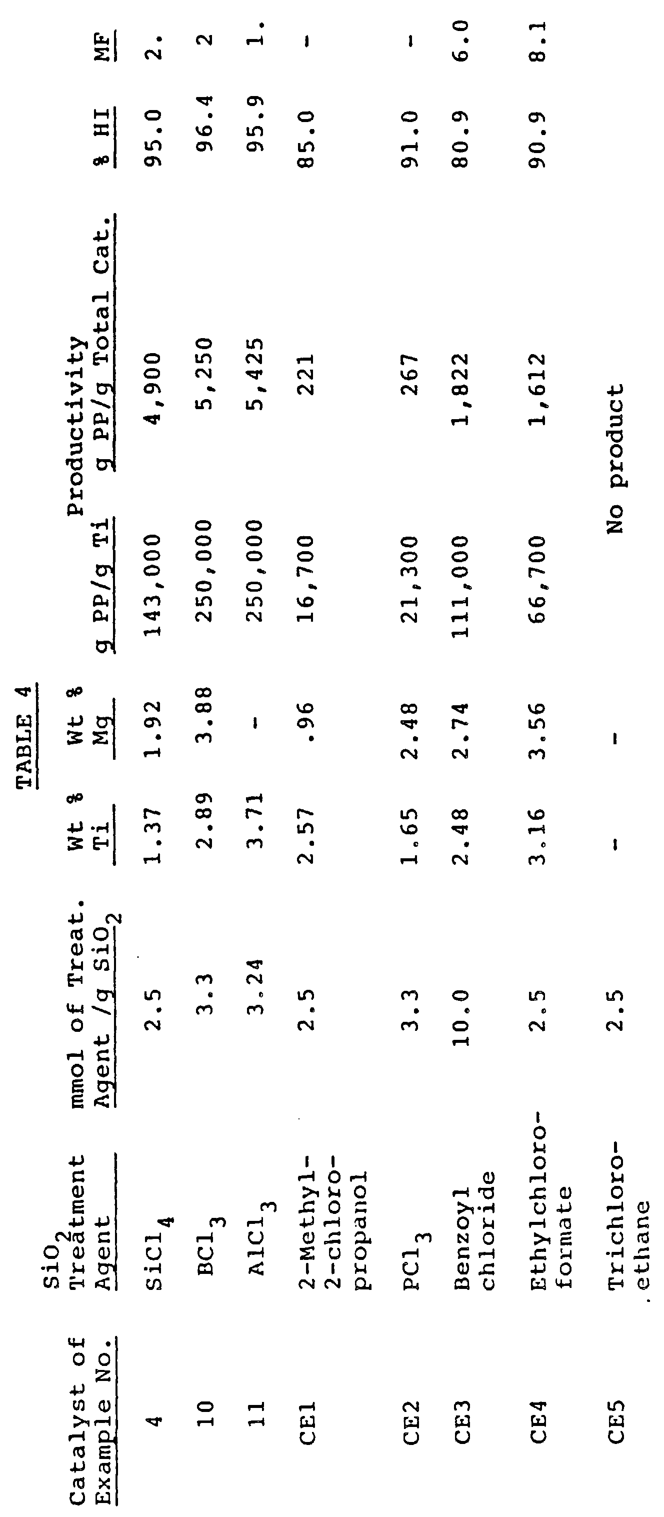

### EXAMPLE 12 AND COMPARATIVE EXAMPLE 6

### Effect of the Solubility of Magnesium Compound

In these examples the criticality of a soluble magnesium source is emphasized. In Example 12 a mixed dialkoxy magnesium source, specifically, a mixture of C₅ to C₁₁ dialkoxymagnesium, was employed. It produced acceptable results, as established in Table 4, discussed below.

In Comparative Example 6 equal molar quantities of diethoxymagnesium was mixed with magnesium chloride, by comilling the solid magnesium chloride and the liquid diethoxymagnesium. The resultant catalyst of Comparative Example 6, a solid, produced a catalyst having unacceptably low catalytic productivity, as well as very low isotacticity, as manifested by 78.4% heptane insolubles, and a melt flow rate too high to measure, indicative of a very low degree of polymerization.

These results are summarized in Table 4 which includes the results obtained for the catalyst of Example 1. The results obtained polymerizing propylene with the catalyst of Example 1 is reproduced since the catalysts of Example 12 and Comparative Example 6 were formed in accordance with the procedure of Example 1 except for the variation involving the use of the magnesium compound.

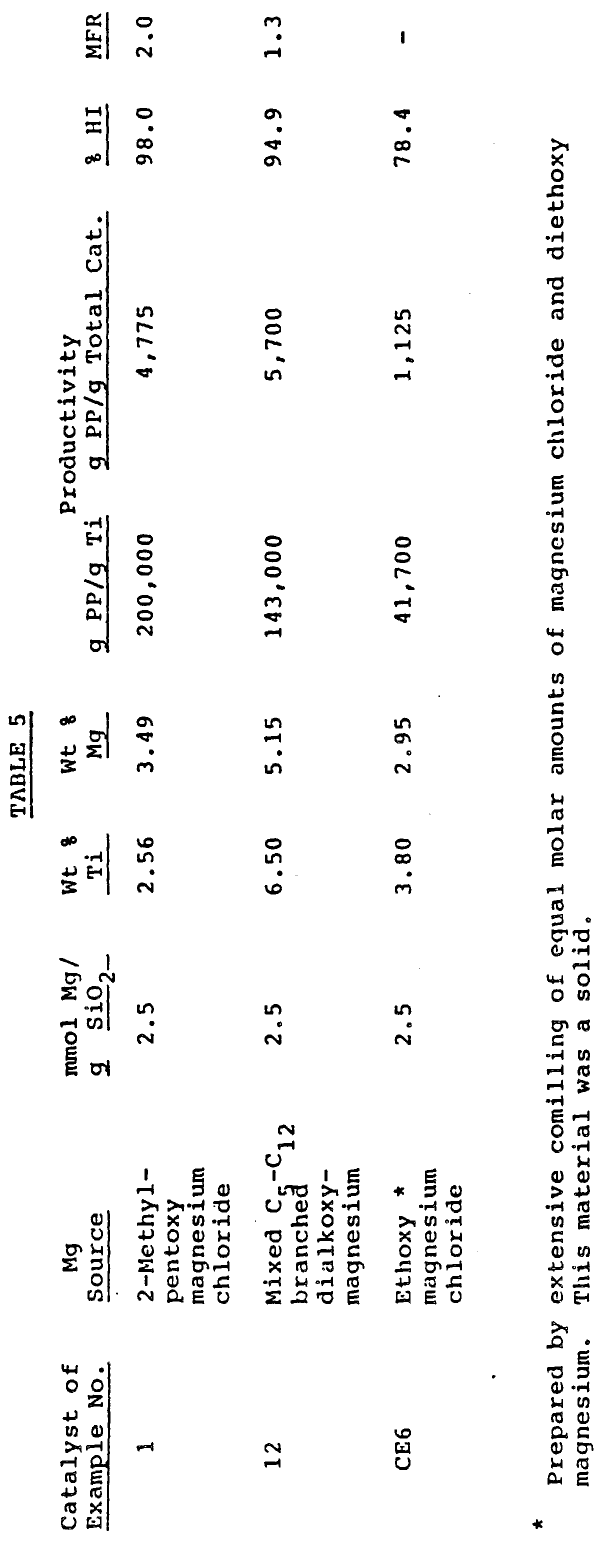

### EXAMPLES 13 TO 15 AND COMPARATIVE EXAMPLE 7

### Effect of Titanium Esters

These examples illustrate the importance of titanium esters on the formation of the catalyst of the present invention. In all of these examples the catalyst was formed in accordance with the procedure of Example 1 except for the step involving contacting the silica support with a titanium ester. In Examples 13 and 14, titanium tetrabutoxide and titanium tetranonolate, respectively, replaced the titanium ester of Example 1. The concentration of the esters of Examples 13 and 14 were identical with that of Example 1. In Example 15 the replacement titanium ester, tetra-2-ethylhexyltitanate, was used in substantially the same concentration. In all three examples the polypropylene product characteristics were acceptable albeit inferior to those obtained utilizing the catalyst of Example 1. Catalytic productivity of the catalysts of Examples 13 to 15 was inferior to the catalyst of Example 1 although within acceptable levels. In Comparative Example 7, the steps of treating the silica with a titanium ester was omitted. The catalyst of this example yielded a catalytic productivity too low for commercial acceptability.

The results of these examples, with the inclusion of Example 1 as a comparison, is summarized in Table 5.

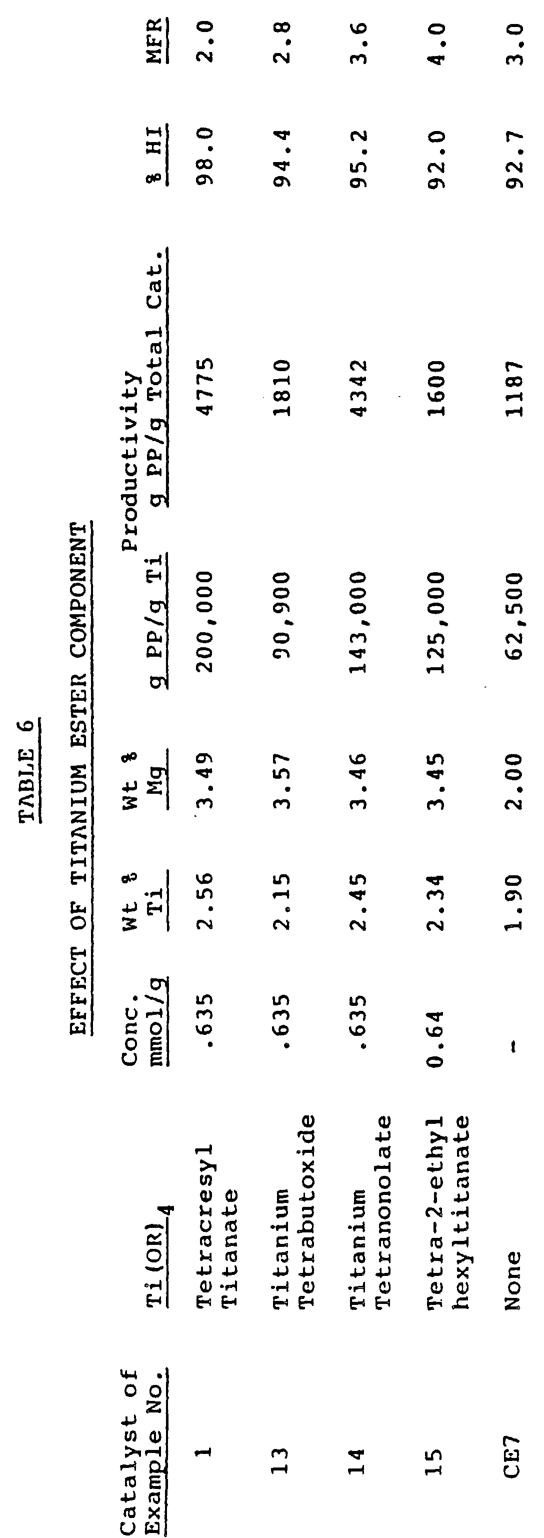

### COMPARATIVE EXAMPLE 8

### Effect of Alumina Carrier

A catalyst was prepared in accordance with the procedure of Examples 1 and 2 but for the substitution of silica calcined at 600°C in nitrogen with alumina calcined at 200°C in nitrogen.

When this catalyst was employed in the polymerization of propylene in accordance with the procedure of Example 6 the catalytic activity was found to be 52,600 grams of polypropylene per gram of titanium, an unacceptably low value. Moreover, the degree of stereoregularity, manifested as the percent heptane insolubles, was only 90.7, far below the desirable 95% isotacticity, levels obtained using the catalysts within the scope of the present invention.

### EXAMPLES 16 AND 17

### Effect of the Use of Internal Electron Donors

Examples 16 and 17 illustrate the effect of internal electron donors in the formation of catalysts within the contemplation of the present invention. In the two examples, the catalyst was prepared in accordance with the procedure utilized in the formation of the catalyst of Example 1. However in Examples 16 and 17, ethyl benzoate was used as an internal electron donor in the formation of the catalyst. In Example 16, 5.90 mmol of ethyl benzoate was introduced into the catalyst by being premixed with tetracresyl titanate. In Example 17, 2.98 mmol ethyl benzoate was introduced into the catalyst by being premixed with titanium tetrachloride.

Table 6 summarizes the results of these examples. Both of these examples employing an internal electron donor produced a satisfactory propylene polymerization catalyst albeit, not as effective as the more preferred embodiment of Example 1. The inclusion of Example 1, the catalyst of which was formed identically, but for the incorporation of an electron donor, in Table 6 establishes the quantitative superiority of the catalyst of Example 1 over those of Examples 16 and 17.

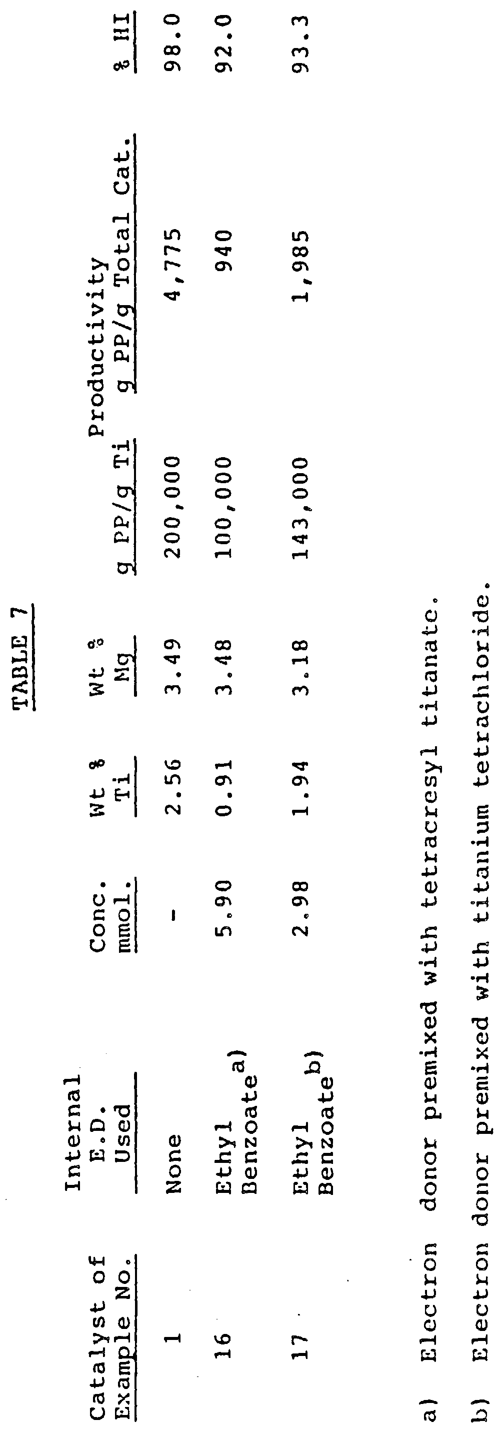

The above embodiments and examples are given to illustrate the scope and spirit of the instant invention. These embodiments and examples will make apparent, to those skilled in the art, other embodiments and examples. These other embodiments and examples are within the contemplation of the present invention. Therefore, the present invention should be limited only by the appended claims.

## Claims

1. A silica supported catalytic precursor obtainable by
(a) treating a silica support to remove surface hydroxyl groups by calcining the silica in an inert atmosphere at a temperature of at least 200°C; or by contacting the silica support with a monofunctional organic silicon compound at a temperature of O°C to 100°C for 30 min to 2 h, thereby converting the original surface hydroxyl groups of the silica support in part to a surface of the formula -Si-O-Si-;
(b) if desired, thereafter treating the thus obtained silica support with an additional modifying agent, selected from silicon halides, boron halides, aluminum halides, alkyl silicon halides and mixtures thereof;
(c) reacting the silica support thus obtained with a hydrocarbon soluble magnesium compound, selected from the group consisting of di[hydrocarbyloxy]magnesiums, hydrocarbyloxymagnesium halides or mixtures thereof, as the only magnesium compound at a temperature of 0°C to 160°C for 5 min to 6 h to prepare a magnesium-containing silica support having a reduced SiOH content;
(d) reacting the silica support thus obtained with at least one titanium compound having the formula Ti(OR)ₙXₘ or TiRₙXₘ wherein R is an aryl group, an alkyl group or mixtures thereof; X is a halogen atom; n is an integer of 1 to 4; m is 0 or an integer of 1 or 2; and the sum of m and n is 4, at a temperature of 0°C to 120°C for 5 min to 2 h or more.

2. The silica supported catalytic precursor according to claim 1, wherein the titanium compound is of the formula Ti(OR)ₙXₘ wherein R is an aryl group, an alkyl group or mixtures thereof; X is a halogen atom; n is an integer of 1 to 4; m is O or an integer of 1 or 2; and the sum of m and n is 4.

3. The silica supported catalytic precursor according to claim 1, wherein the monofunctional organic silicon compound is selected from silicon halides, alkyl silicon halides, hexaalkyl disilazanes and mixtures thereof.

4. The silica supported catalytic precursor according to claim 3, wherein said monofunctional organic silicon compound is a hexaalkyl disilazane.

5. The silica supported catalytic precursor according to claim 1, wherein step (b) is conducted at a temperature of 0°C to 100°C for 30 min to 2 h to further convert the said surface hydroxyl groups.

6. The silica supported catalytic precursor according to claim 1, wherein the hydrocarbon soluble magnesium compound is an alkoxy magnesium halide.

7. The silica supported catalytic precursor according to any of claims 2 to 6, wherein the compound having the structural formula Ti(OR)ₙXₘ is tetrahydrocarbyloxytitanium, trihydrocarbyloxytitanium halide, dihydrocarbyloxytitanium dihalide or mixtures thereof.

8. The silica supported catalytic precursor according to any of claims 2 to 6, wherein the titanium compound of formula Ti(OR)ₙXₘ is a compound of formula Ti(OR)₄.

9. The silica supported catalytic precursor according to claim 8, wherein Ti(OR)₄ is tetracresyl titanate, titanium tetrastearate, titanium tetrabutoxide, titanium tetranonolate, tetra-2-ethylhexyltitanate, tetraisobutyltitanate, tetra-n-propyltitanate, tetraisopropyltitanate or mixtures or oligomers or isomers thereof.

10. The silica supported catalytic precursor according to any of claims 1 to 9, wherein the silica has a surface area in the range of between 80 and 300 m²/g, a medium particle size of 20 to 200 µm (microns) and a pore volume of between 0.6 to 3.0 ml/g (cc/g).

11. The silica supported catalytic precursor according to claim 1, wherein the silica comprises at least 90 % by weight of pure silica and optionally minor amounts of one or more of alumina, titania, zirconica, magnesia or mixtures thereof.

12. A catalyst obtainable by reacting the silica supported catalytic precursor according to any of claims 1 to 11 with a titanium halide of the formula TiX¹ₚ(OR¹)_{q} wherein X¹ is a halogen atom, R¹ is an aryl or alkyl group, p is an integer of 1 to 4, q is 0 or an integer of 1 to 3, and the sum of p and q is 4 at a temperature of 0°C to 150°C for 1 h to 4 h.

13. The catalyst according to claim 12, wherein the titanium halide has the formula TiX¹₄.

14. The catalyst according to claim 12 or 13, wherein the catalyst includes a co-catalyst.

15. The catalyst according to claim 14, wherein the co-catalyst is an alkylaluminum, an alkylaluminum halide or mixtures thereof and at least one silane compound.

16. The catalyst according to claim 14, wherein the co-catalyst is triethylaluminum or triisobutylaluminum and a hydrocarbyl alkoxysilane.

17. Use of a catalyst according to any of claims 12 to 16 for the preparation of a polyolefin together with an aluminum-containing compound as a first co-catalyst and with a second co-catalyst.

18. The use according to claim 17, wherein the polyolefin is a polymer of propylene, 1-butene, 3-methylbuten-1 or 4-methylpentene-1 or a copolymer with one or more other alpha olefins.

## Patentansprüche

1. Auf Siliciumoxid als Träger aufgezogene katalytische Vorstufe, erhältlich durch die Schritte, daß man
(a) einen Siliciumoxid-Träger zur Entfernung von Oberflächen-Hydroxyl-Gruppen behandelt, indem man das Siliciumoxid in einer inerten Atmosphäre bei einer Temperatur von wenigstens 200 °C calciniert; oder indem man den Siliciumoxid-Träger mit einer monofunktionellen organischen Silicium-Verbindung bei einer Temperatur von 0 °C bis 100 °C für die Zeit von 30 min bis 2 h in Kontakt bringt, wodurch man die ursprünglichen Oberflächen-Hydroxyl-Gruppen des Siliciumoxid-Trägers zum Teil in eine Oberfläche der Formel -Si-O-Si- umwandelt;
(b) sofern erwünscht, danach den so erhaltenen Siliciumoxid-Träger mit einem weiteren modifizierenden Mittel behandelt, das gewählt ist aus Siliciumhalogeniden, Borhalogeniden, Aluminiumhalogeniden, Alkylsiliciumhalogeniden und Mischungen daraus;
(c) den so erhaltenen Siliciumoxid-Träger mit einer in einem Kohlenwasserstoff löslichen Magnesium-Verbindung umsetzt, die gewählt ist aus der Gruppe, die besteht aus Di-[hydrocarbyloxy-]magnesium-Verbindungen, Hydrocarbyloxymagnesiumhalogeniden oder Mischungen daraus als einzige Magnesium-Verbindung bei einer Temperatur von 0 °C bis 160 °C für die Zeit von 5 min bis 6 h unter Herstellung eines Magnesium enthaltenden Siliciumoxid-Trägers mit einem reduzierten SiOH-Gehalt;
(d) den so erhaltenen Siliciumoxid-Träger bei einer Temperatur von 0 °C bis 120 °C für die Zeit von 5 min bis 2 h oder mehr mit wenigstens einer Titan-Verbindung umsetzt, die die Formel Ti(OR)ₙXₘ oder TiRₙXₘ aufweist, worin R für eine Aryl-Gruppe, eine Alkyl-Gruppe oder Mischungen daraus steht, X für ein Halogenatom steht, n eine ganze Zahl von 1 bis 4 ist, m 0 oder eine ganze Zahl von 1 oder 2 ist und die Summe von m und n 4 ist.

2. Auf Siliciumoxid als Träger aufgezogene katalytische Vorstufe nach Anspruch 1, worin die Titan-Verbindung die Formel Ti(OR)ₙXₘ aufweist, worin R eine Aryl-Gruppe, eine Alkyl-Gruppe oder Mischungen daraus ist, X ein Halogenatom ist, n eine ganze Zahl von 1 bis 4 ist, m 0 oder eine ganze Zahl von 1 oder 2 ist und die Summe von m und n 4 ist.

3. Auf Siliciumoxid als Träger aufgezogene katalytische Vorstufe nach Anspruch 1, worin die monofunktionelle organische Silicium-Verbindung gewählt ist aus Siliciumhalogeniden, Alkylsiliciumhalogeniden, Hexaalkyldisilazanen und Mischungen daraus.

4. Auf Siliciumoxid als Träger aufgezogene katalytische Vorstufe nach Anspruch 3, worin die monofunktionelle organische Silicium-Verbindung ein Hexaalkyldisilazan ist.

5. Auf Siliciumoxid als Träger aufgezogene katalytische Vorstufe nach Anspruch 1, worin Schritt (b) durchgeführt wird bei einer Temperatur von 0 °C bis 100 °C für die Zeit von 30 min bis 2 h, um weiter die Oberflächen-Hydroxyl-Gruppen umzuwandeln.

6. Auf Siliciumoxid als Träger aufgezogene katalytische Vorstufe nach Anspruch 1, worin die in einem Kohlenwasserstoff lösliche Magnesium-Verbindung ein Alkoxymagnesiumhalogenid ist.

7. Auf Siliciumoxid als Träger aufgezogene katalytische Vorstufe nach einem der Ansprüche 2 bis 6, worin die Verbindung, die die Strukturformel Ti(OR)ₙXₘ aufweist, Tetra hydrocarbyloxytitan, Trihydrocarbyloxytitanhalogenid, Dihydrocarbyloxytitandihalogenid oder Mischungen daraus ist.

8. Auf Siliciumoxid als Träger aufgezogene katalytische Vorstufe nach einem der Ansprüche 2 bis 6, worin die Titan-Verbindung der Formel Ti(OR)ₙXₘ eine Verbindung der Formel Ti(OR)₄ ist.

9. Auf Siliciumoxid als Träger aufgezogene katalytische Vorstufe nach Anspruch 8, worin Ti(OR)₄ Tetracresyltitanat, Titantetrastearat, Titantetrabutoxid, Titantetranonolat, Tetra-2-ethylhexyltitanat, Tetraisobutyltitanat, Tetra-n-propyltitanat, Tetraisopropyltitanat oder Mischungen daraus oder Oligomere oder Isomere der genannten Verbindungen ist.

10. Auf Siliciumoxid als Träger aufgezogene katalytische Vorstufe nach einem der Ansprüche 1 bis 9, worin das Siliciumoxid eine Oberfläche im Bereich von zwischen 80 und 300 m²/g, eine mittlere Teilchengröße von 20 bis 200 µm (Micron) und ein Porenvolumen von zwischen 0,6 und 3,0 ml/g (cc/g) aufweist.

11. Auf Siliciumoxid als Träger aufgezogene katalytische Vorstufe nach Anspruch 1, worin das Siliciumoxid wenigstens 90 Gew.-% reines Siliciumoxid und gegebenenfalls Mindermengen einer oder mehrerer der Verbindungen Aluminiumoxid, Titanoxid, Zirkoniumoxid, Magnesiumoxid oder deren Mischungen umfaßt.

12. Katalysator, erhältlich durch Umsetzen der auf Siliciumoxid als Träger aufgezogenen katalytischen Vorstufe nach einem der Ansprüche 1 bis 11 mit einem Titanhalogenid der Formel TiX¹ₚ(OR¹)_{q}, worin X¹ ein Halogenatom ist, R¹ eine Aryl-Gruppe oder Alkyl-Gruppe ist, p eine ganze Zahl von 1 bis 4 ist, q 0 oder eine ganze Zahl von 1 bis 3 ist und die Summe von p und q 4 ist, bei einer Temperatur von 0 °C bis 150 °C für die Zeit von 1 h bis 4 h.

13. Katalysator nach Anspruch 12, worin das Titanhalogenid die Formel TiX¹₄ aufweist.

14. Katalysator nach Anspruch 12 oder Anspruch 13, worin der Katalysator einen Cokatalysator einschließt.

15. Katalysator nach Anspruch 14, worin der Cokatalysator eine Alkylaluminium-Verbindung, ein Alkylaluminiumhalogenid oder Mischungen daraus und wenigstens eine Silan-Verbindung ist.

16. Katalysator nach Anspruch 14, worin der Cokatalysator Triethylaluminium oder Triisobutylaluminium und ein Hydrocarbylalkoxysilan ist.

17. Verwendung eines Katalysators nach einem der Ansprüche 12 bis 16 zur Herstellung eines Polyolefins zusammen mit einer Aluminium enthaltenden Verbindung als erstem Cokatalysator und mit einem zweiten Cokatalysator.

18. Verwendung nach Anspruch 17, worin das Polyolefin ein Polymer von Propylen, 1-Buten, 3-Methylbuten-1 oder 4-Methylpenten-1 oder ein Copolymer mit einen oder mehreren anderen Alpha-Olefinen ist.

## Revendications

1. Précurseur catalytique supporté par de la silice, que l'on peut obtenir
(a) en traitant un support de silice pour éliminer les groupes hydroxyle en surface, par calcination de la silice dans une atmosphère inerte à une température d'au moins 200°C ; ou encore par mise en contact du support de silice avec un composé organique monofonctionnel du silicium à une température de 0 à 100°C pendant 30 minutes à 2 heures, de façon à convertir en partie les groupes hydroxyle en surface originaux du support de silice en une surface de formule -Si-O-Si- ;
(b) si on le souhaite, en traitant ensuite le support de silice ainsi obtenu avec un modifiant additionnel, choisi parmi les halogénures de silicium, les halogénures de bore, les halogénures d'aluminium, les halogénures d'alkylsilicium et leurs mélanges ;
(c) en faisant réagir le support de silice ainsi obtenu avec un composé du magnésium soluble dans les hydrocarbures, choisi parmi l'ensemble comprenant les di[hydrocarbyloxy]magnésiums , les halogénures d'hydrocarbyloxymagnésium ou leurs mélanges, en tant que seul composé du magnésium, à une température de 0 à 160°C, pendant 5 minutes à 6 heures, pour préparer un support de silice contenant du magnésium et ayant une teneur réduite en SiOH ;
(d) en faisant réagir le support de silice ainsi obtenu avec au moins un composé du titane ayant la formule Ti(OR)ₙXₘ ou TiRₙXₘ, où R est un groupe aryle, un groupe alkyle ou leurs mélanges ; X est un atome d'halogène ; n est un entier valant 1 à 4 ; m vaut 0 ou un entier valant 1 ou 2 ; et la somme de m et de n vaut 4, à une température de 0 à 120°C pendant 5 minutes à 2 heures ou plus.

2. Précurseur catalytique supporté par de la silice selon la revendication 1, dans lequel le composé du titane a la formule Ti(OR)ₙXₘ, où R est un groupe aryle, un groupe alkyle ou leurs mélanges ; X est un atome d'halogène ; n est un entier valant 1 à 4 ; m vaut 0 ou est un entier valant 1 ou 2 ; et la somme de m et de n vaut 4.

3. Précurseur catalytique supporté par de la silice selon la revendication 1, dans lequel le composé organique monofonctionnel du silicium est choisi parmi les halogénures de silicium, les halogénures d'alkylsilicium, les hexaalkyldisilazanes et leurs mélanges.

4. Précurseur catalytique supporté par de la silice selon la revendication 3, dans lequel ledit composé organique monofonctionnel du silicium est un hexaalkyldisilazane.

5. Précurseur catalytique supporté par de la silice selon la revendication 1, dans lequel l'étape (b) est mise en oeuvre à une température de 0 à 100°C pendant 30 minutes à 2 H, pour assurer une conversion plus poussée desdits groupes hydroxyle en surface.

6. Précurseur catalytique supporté par de la silice selon la revendication 1, dans lequel le composé du magnésium soluble dans les hydrocarbures est un halogénure d'alcoxymagnésium.

7. Précurseur catalytique supporté par de la silice selon l'une quelconque des revendications 2 à 6, dans lequel le composé ayant la formule développée Ti(OR)ₙXₘ est un tétrahydrocarbyloxy-titane, un halogénure de trihydrocarbyloxytitane, un dihalogénure de dihydrocarbyloxytitane ou leurs mélanges.

8. Précurseur catalytique supporté par de la silice selon l'une quelconque des revendications 2 à 6, dans lequel le composé du titane de formule Ti(OR)ₙXₘ est un composé de formule Ti(OR)₄.

9. Précurseur catalytique supporté par de la silice selon la revendication 8, dans lequel Ti(OR)₄ est le titanate de tétracrésyl, le tétrastéarate de titane, le tétrabutylate de titane, le tétranonoate de titane, le titanate de tétra-2-éthylhexyle, le titanate de tétraisobutyle, le titanate de tétra-n-propyle, le titanate de tétraisopropyle ou leurs mélanges ou oligomères ou isomères.

10. Précurseurs catalytiques supportés par de la silice selon l'une quelconque des revendications 1 à 9, dans lequel la silice a une aire spécifique comprise dans l'intervalle de 80 à 300 m²/g, une granulométrie moyenne de 20 à 200 µm (micromètres) et un volume des pores compris entre 0,6 et 3,0 ml/g (cm³/g).

11. Précurseur catalytique supporté par de la silice selon la revendication 1, dans lequel la silice comprend au moins 90 % en poids de silice pure, et éventuellement des quantités mineures d'un ou plusieurs oxydes d'aluminium, de titane, de zirconium, de magnésium ou leurs mélanges

12. Catalyseur que l'on peut obtenir en faisant réagir le précurseur catalytique supporté par de la silice, selon l'une quelconque des revendications 1 à 11, avec un halogénure de titane de formule TiX¹ₚ(OR¹)_{q} où X¹ est un atome d'halogène, R¹ est un groupe aryle ou alkyle, p est un entier valant 1 à 4, q vaut 0 ou est un entier valant 1 à 3, et la somme de p et de q vaut 4, à une température de 0 à 150°C pendant 1 h à 4 h.

13. Catalyseur selon la revendication 12, dans lequel l'halogénure de titane a la formule TiX¹₄.

14. Catalyseur selon la revendication 12 ou 13, dans lequel le catalyseur comprend un co-catalyseur.

15. Catalyseur selon la revendication 14, dans lequel le co-catalyseur est un alkylaluminium, un halogénure d'alkylaluminium ou leurs mélanges et au moins un composé du silane.

16. Catalyseur selon la revendication 14, dans lequel le co-catalyseur est le triéthylaluminium ou le triisobutylaluminium et un hydrocarbylalcoxy-silane.

17. Utilisation d'un catalyseur selon l'une quelconque des revendications 12 à 16, pour préparer une polyoléfine avec un composé contenant de l'aluminium servant de premier co-catalyseur, et avec un deuxième co-catalyseur.

18. Utilisation selon la revendication 17, dans laquelle la polyoléfine est un polymère du propylène, du 1-butène, du 3-méthylbutène-1 ou du 4-méthylpentène-1, ou un copolymère avec une ou plusieurs autres alpha-oléfines.
